# EUROPEAN PATENT SPECIFICATION

(11) **EP 3 803 310 B1**
(45) Date of publication and mention of the grant of the patent: **03.08.2022**
(21) Application number: 19737899.5
(22) Date of filing: 07.06.2019
(51) Int. Cl.: G01M 3/16, E04D 13/00, G08B 21/20

(54) **SENSING TAPE TO DETERMINE THE PRESENCE AND THE POSITION OF A LIQUID ON A SURFACE**
ABTASTBAND ZUR BESTIMMUNG DES VORHANDENSEINS UND DER POSITION EINER FLÜSSIGKEIT AUF EINER OBERFLÄCHE
BANDE DE DÉTECTION PERMETTANT DE DÉTERMINER LA PRÉSENCE ET LA POSITION D'UN LIQUIDE SUR UNE SURFACE

(30) Priority: 08.06.2018 IT 201800006155
(43) Date of publication of application: 14.04.2021
(73) Proprietor: TENET S.R.L. CON UNICO SOCIO, 31032 Casale Sul Sile (TV) (IT)
(72) Inventor: CAVALLI, Manuele, 31032 Casale Sul Sile (TV) (IT)
(74) Representative: Maroscia, Antonio
(86) International application number: PCT/IB2019/054768
(87) International publication number: WO 2019/234703

(56) References cited:
- WO-A1-2009/131280
- WO-A1-2010/064753
- CA-A1- 2 520 202
- DE-A1- 3 011 500
- US-B1- 6 175 310

## Description

### CROSS-REFERENCE TO RELATED APPLICATIONS

This patent application claims priority from italian patent application no. 102018000006155 filed on 08/06/2018.

### TECHNICAL FIELD

The present invention relates to a sensing tape to determine the presence and the position of a liquid on a surface. In particular, the invention relates to a sensing tape applicable to a surface of a roof, or of a base of a piece of furniture, or of a skirting board to determine the presence and the position of a liquid, corresponding preferably to water, on the surface thereof.

### BACKGROUND ART

The need to be able to determine the condition of roofs in relation to the presence of infiltrations of water is nowadays a common requirement, especially in roofs provided with coverings in flat/curved tiles, in order to eliminate consequent problems such as, for example, damage to the insulation system and/or to the walls/structures below, times and costs for removal of the flat/curved tiles, to carry out repair operations, and for repositioning the flat/curved tiles on the insulation system. Multiple technical solutions have been proposed to meet the above-mentioned need.

For example, the patent EP 2 458 106 B1 describes a device for verifying and controlling the performance characteristics of a roof using a device that comprises a sheet provided with a two-wire flat cable, or a four-wire cable. In use, the device exploits a resistive measurement between the two wires or the four wires to indicate the presence of water.

Other known equipment, comprising flexible tapes having electrical traces mounted thereon, for detecting leaks is further described in the applications WO2010064753 and WO2009131280.

### DISCLOSURE OF INVENTION

The object of the present invention is to provide a system which, in addition to being simple, inexpensive and robust is able to provide both indication of the presence of a conductive liquid, preferably water, on a surface, for example belonging to a roof, and the position thereof.

This object is achieved by the present invention relative to one or more sensing tapes that can be positioned on a surface, for example of a roof, to determine the presence of a conductive liquid, for example water, and the surface position thereof, as defined in the attached claims.

The present invention also relates to a system and to a method to determine the presence and the position of a conductive liquid on a surface as defined in the attached claims.

The present invention further relates to a use of the sensing tape to determine the presence and the position of a conductive liquid on a surface, as defined in the attached claims.

### BRIEF DESCRIPTION OF THE DRAWINGS

The present invention will now be described with reference to the attached drawings, which illustrate a non-limiting embodiment example thereof, in which:
- Figure 1 shows a system to determine infiltrations of water on a roof, produced according to the teachings of the present invention;
- Figure 2 is a partially perspective view of a partially rolled-up sensing tape, not in accordance with the current invention;
- Figure 3 is a plan view of a portion of the sensing tape shown in Figure 2;
- Figure 4 is a longitudinal section of the portion of sensing tape shown in Figure 3;
- Figure 5 shows the sensing tape in an operating condition for detecting water;
- Figures 6 and 7 show a sensing tape not in accordance with the current invention in two operating conditions for reading the electric resistance of the tape;
- Figure 8 is a plan view of the sensor tape produced according to the current invention;
- Figure 9 shows an embodiment according to a variation of the system shown in Figure 1;
- Figure 10 shows a system according to a further variation of the present invention.

### BEST MODE FOR CARRYING OUT THE INVENTION

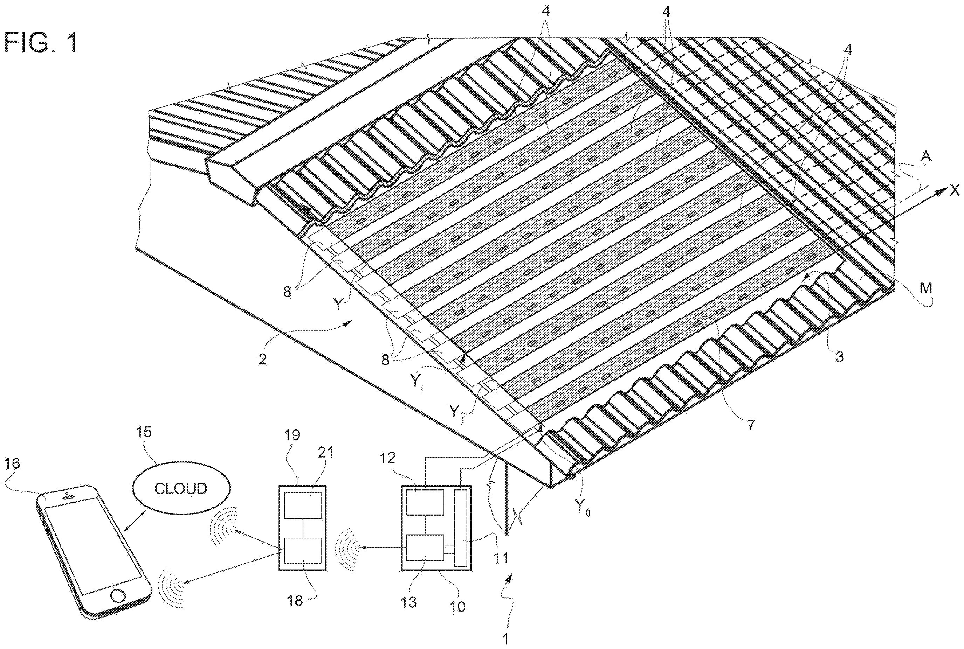

The present invention will now be described in detail with reference to the attached Figures to enable a person skilled in the art to produce it and use it. Various modifications to the embodiments described will be immediately evident to persons skilled in the art and the general principles described can be applied to other embodiments and applications without departing from the scope of the present invention, as defined in the attached claims. Therefore, the present invention must not be considered limited to the embodiments described and illustrated, but must be accorded the widest scope in accordance with the principles and characteristics described and claimed here. With reference to Figure 1, the number 1 designates overall a system to determine a state of presence/infiltration of an electrically conductive liquid on/in a surface. According to a preferred embodiment illustrated in Figure 1 the surface may correspond to the surface of a roof 2.

It is understood, however, that the present invention must not be considered limited to determination of the presence/infiltration and position of a liquid on a roof but may have other applications. In fact, the Applicant has found it particularly advantageous to apply the present invention, namely the system, to determine the presence of the liquid on a surface portion of a domestic element or on a surface portion of a wall of a building. According to an embodiment example, the system may detect the presence and position of liquid on a surface of a furnishing element, for example on the base of a piece of furniture. According to an embodiment example, the system may detect the presence and the position of the liquid on a surface of a skirting board applied to the wall of a building.

Preferably, the electrically conductive liquid may correspond to water or similar, while the state of infiltration/presence may be associated with the presence of the liquid, preferably water, humidity/condensate or similar on the monitored surface.

According to the preferred embodiment shown in the attached Figures, in which the system is applied to a roof, the monitored surface may correspond to one or more generally protected surface areas of the roof, i.e. in which the liquid is absent in a condition of correct operation/maintenance of the roof 2. In the example illustrated in Figure 1, the roof 2 may be preferably provided with an insulation system 3, and preferably at least one covering M in flat/curved tiles arranged above the insulation system 3 so as to cover it.

Merely by way of non-limiting example, the following description will refer explicitly, without loss of generality, to a system 1 which determines the presence and expediently the position of an infiltration of water in the surface corresponding to an insulation system 3. It is understood, however, that the present invention must not be considered limited to the monitoring of a specific part of the roof such as, for example, the insulation system, but may be used, based on the following description, on any other surface of the roof 2 where it is necessary to detect a state of infiltration/presence of a conductive liquid.

With reference to the accompanying Figures, the sensor system 1 comprises one or more flexible sensing tapes 4, each of which has a preferably rectangular elongated shape, extends along a longitudinal axis A, and is designed to be arranged with its lower largest surface resting on the surface of the roof 2 to be monitored, for example the upper surface of the insulation system 3. The sensing tapes 4 may be arranged on the roof 2, preferably side-by-side and parallel, at pre-set distances from one another.

For a better understanding and greater clarity of the following description, Figure 1 shows an X-Y Cartesian reference system arranged roughly coplanar with the surface of the roof 2 to be monitored in which the axis X (abscissa) is roughly parallel to the axes A of the sensing tapes 4, and the axis Y (ordinate) is orthogonal to the same.

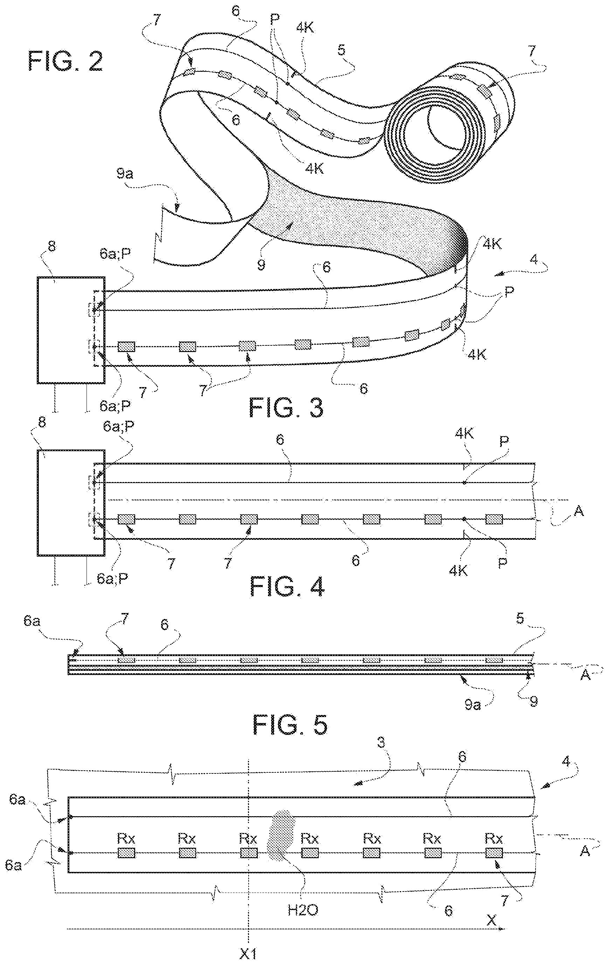

With reference to Figures 2 to 4, each sensing tape 4 comprises at least one support layer 5 made of electrically insulating flexible material, and an electric resistive measurement circuit. The support layer 5 is structured to support the electric resistive measurement circuit. The electric resistive measurement circuit comprises at least two electric wires 6.

The support layer 5 may be preferably composed of a fine film made of high-flexibility plastic material. The high-flexibility of the support layer 5 on the one hand allows the tape 4 to be rolled-up, thus conveniently obtaining a roll designed to be transported manually, especially on a roof, and on the other allows simplification of manual application of the tape 4 on the surface to be monitored (Figure 2). The support layer 5 may be made of any high-flexibility electrically insulating material such as, for example, rubber, plastic, paper, fabric or similar materials. Preferably the support layer 5 may be a material permeable to the conductive liquid and/or a material that absorbs the conductive liquid so as to increase the sensitivity of the tape 4 to detection of the liquid. It is understood, however, that the support layer 5 could be made, alternatively or additionally, by means of a material impermeable to the conductive liquid, preferably impermeable to water.

The Applicant has found that a particularly suitable film for producing the tape 4 may be based on polyimide. In particular, the Applicant has found that a particularly suitable support layer 5 may be obtained by means of a KAPTON^{®}-based film.

It should be noted that according to a variation, the film could be made of a composite material, preferably FR4 or similar.

Preferably, the width of the tape 4 may be expediently between approximately 10 mm and approximately 25 mm. It is understood, however, that the width of the tape 4 may be varied according to the application required. Preferably, the support layer 5 may have a reduced thickness, i.e. it may be thin, thus increasing the flexibility. Preferably, the thickness of the support layer 5 may range between 50 micron and 350 micron. It is understood, however, that the support layer 5 is sized and structured so as to guarantee sufficient robustness for the specific building application in question.

With reference to the accompanying Figures, the wires 6 are made of electrically conductive material, for example copper or aluminium, they are side-by-side and spaced from one another at a pre-set distance, and extend along the sensing tape 4 parallel to said longitudinal axis A. Preferably, the wires 6 may be filiform. It is understood, however, that the wires 6 could be plate-like (flat cables) and/or have any similar shape designed to the purpose of the present invention.

The electric resistive measurement circuit of the sensing tape 4 further comprises a plurality of electric components 7, which are arranged along at least one of said wires 6 at pre-set distances from one another (measured along the axis X) and have respective pre-set resistances. In the embodiment example shown in the accompanying Figures, the electric components 7 expediently consist of electric resistor components which have respective pre-set resistances, designated below by Rx. It is understood that the reciprocal distance between the electric resistor components 7 along the axis A depends on the resolution of the desired detection and/or on the length of the tape 4. The distance between two consecutive electric resistor components 7 along the tape 4 may, for example, range between approximately 20 cm and approximately 70 cm, preferably approximately 50 cm.

The Applicant has found that the electric resistor components may expediently comprise a same resistance value Rx and be arranged at a same distance from one another. Preferably the resistance could range between approximately 50 and approximately 300 Ohm. Preferably the resistance of the resistors could be approximately 100 Ohm.

With reference to the accompanying Figures, the wires 6 and the electric components 7 may be embedded/enclosed inside the support layer 5 thus being covered by the same. In fact, the Applicant has found that the support layer 5 may be expediently made of material permeable to the conductive liquid, in particular permeable to water.

The Applicant has further found that it is possible to alternatively produce the support layer 5 in material impermeable to the conductive liquid, in particular permeable to water, and obtain openings on the surface, preferably the upper largest surface of the support layer 5 t the electric components 7 to establish communication between the latter and the external environment. In this way, the electric components 7 expediently come into contact with the conductive liquid.

It is understood, however, that the wires 6 and the electric components 7, according to an alternative embodiment, may also be made on one of the two surfaces of the support layer 5, preferably the upper largest surface, opposite the lower largest resting surface. In this case, the Applicant has found that it may be preferably expedient to provide, on the upper largest surface of the support layer 5, a covering/layer in antioxidant material to protect the wires 6 and the electric components 7.

Preferably, the tape 4 may comprise an adhesive layer 9 designed to permanently fix the tape 4 onto the surface 3 of the roof 2 to be monitored. The Applicant has found, for example, that it could be expedient to use a band-shaped removable film 9a which covers the adhesive layer 9 and which, in use, is separated from the tape 4 to allow fixing of the tape 4 onto the roof 2 (Figure 2). The production and/or fixing of the wires 6 and the electric components 7 on the support layer 5 may be carried out by means of any production process such as, for example, by deposition, photolithography, plasma, printing with electrostatic adhesives, and using conductive inks or pastes, graphite, etc.

According to an embodiment example shown in Figure 1, the tape 4 has a terminal 6a for each wire 6. Preferably the terminal 6a consists of an end of a wire 6 present at an end of the sensing tape 4. The terminal 6a may be expediently obtained by cutting the tape 4 at preferential cutting points transversal to the axis A. The surface of the tape 4 may be expediently provided with notches 4K, for example moulded at pre-set distances from one another and relative to the electric components 7, indicative of the preferential cutting points. In this way, an indication is given to the installer on the point at which to cut the tape 4 transversally to obtain the terminals 6a, preventing damage to the electric components 7.

According to the example shown in Figure 2, the sensing tape 4 has two terminals 6a connected to the two corresponding wires 6. Preferably, the terminal 6a may comprise a pad P made of electrically conductive material, for example copper or similar, shaped to facilitate the electric connection with electric terminals/connectors or similar. The pads P may be arranged on/in the layer 5 of the tape 4 along the wires 6 at the notches 4K. In use, the execution of a cut on the tape 4 in a direction roughly transverse to the longitudinal axis A and at the notches 4k allows the pads P to be obtained on the cut longitudinal end of the tape 4 and the terminals 6a to be formed. Preferably, as shown in the example in Figure 1, the system 1 may comprise a plurality of sensing tapes 4. The tapes 4 may be arranged on the surface of the roof 2, substantially side-by-side, parallel to one another, each with its own end, containing the two terminals 6a, in a pre-set position relative to the axis Y.

With reference to a preferred embodiment example shown in Figure 1, the system 1 further comprises a plurality of electric measurement modules 8 which are electrically connected to the respective sensing tapes 4. The electric connection between the electric measurement module 8 and the relative sensing tape 4 may be made for example by means of connectors/electric terminals (not illustrated). In use, the cut end of the tape 4 may be expediently inserted in the connectors/electric terminals of the electric measurement module 8. Closing of the terminal screws may provide the electric contact of the electric measurement module 8 with the pads P defining the terminals 6a. According to a possible embodiment, each electric measurement module 8 may be configured so as to measure/determine the electric resistance of the tape, namely the resistance between the two wires 6 of said tape 4.

The system 1 may further comprise an electronic device 10 which is electrically connected to the electric measurement modules 8 to receive the resistances determined by the same. For this purpose, the electric measurement modules 8 may comprise electric/electronic circuits which are connected, through respective terminals, to a common data/signal exchange bus/line connected in turn to a data/signal processing module 11 of the electronic device 10. The electric measurement modules 8 may furthermore be connected, preferably through respective terminals, to a common electric power supply bus/line connected in turn to an electric power supply device 12 of the electronic device 10. Preferably, the electric measurement modules 8 may be connected along the electric line and along the data line in cascade one after the other. Preferably the two common power supply and data/signal exchange electric lines may be formed of sections of connection lines between the adjacent electric measurement modules 8 as shown in the example of Figure 1.

The data/signal processing module 11 of the electronic device 10 may be configured so as to receive from each tape 4 the relative resistance and determine the presence/absence of liquid and/or the position X of the liquid on the tape 4 along the longitudinal axis A based on the resistance determined. The data/signal processing module 11 is furthermore configured so as to determine the position X,Y of the infiltration on the surface of the roof 2 based on the position X of the liquid on the tape 4 along the axis A and the pre-set position Y of said tape 4 on said surface. In the example illustrated, the position of the liquid on the tape 4 detected along the axis A allows the coordinate of the infiltration to be obtained relative to the axis X, while the pre-set position of the tape 4 on the roof 2 allows the detected coordinate of the infiltration to be obtained relative to the axis Y. Figure 5 shows the presence of a state of infiltration of water (H2O) roughly in a position X1. The water electrically connects the two adjacent sections of the two wires 6 determining a resistance variation between the two terminals 6a, the value of which is indicative of the presence of the liquid and of the connection position X1 of the wires 6 caused by the water.

With reference to Figure 1, the electronic device 10 may further comprise an electronic communication stage 13 configured to communicate data from and to systems 15 and/or remote communication devices 16. According to an embodiment example shown in Figure 1, the communication between the electronic device 10 and the systems 15 and/or remote communication devices 16 may be obtained by means of a communication device 18 arranged, for example, in a central electronic control unit 19. The central electronic control unit 19 may be a domestic electric control unit provided with a processing unit 21 which centrally supervises the system 1 and preferably, but not necessarily, other domotic/detection systems (not illustrated) present in the building. The local communication device 18 may comprise a communication module able to establish communication between one or more communication networks. For example, the communication module may comprise a gateway which carries out a short-range communication to communicate with the electronic communication stage 13 by means of, for example, a domestic communication network. The gateway may furthermore carry out a long-range communication and operate, for example, according to LoRa technology to communicate with an internet/telephone network thus transmitting data to the systems 15 and/or to the remote communication devices 16. Instead, as regards the electronic communication stage 13, it may comprise, for example, a wireless data transmission module (Wi-Fi, Wireless, Bluetooth). It is understood, however, that the electronic communication stage 13 could comprise a wired data/signal transmission module.

As regards the systems 15, they may comprise cloud computing systems or similar. The remote communication devices 16 may instead comprise mobile user communication devices, for example smartphones or similar mobile portable devices.

The central electronic control unit 19 may be configured to communicate to the cloud computing system 15 and/or to the remote communication devices 16 infiltration data indicative of the presence/absence of the state of infiltration/presence of the liquid on the surface of the roof 2, and/or data indicative of the position X, Y of the infiltration/presence of liquid on the surface of the roof 2. The infiltration data, namely presence/absence of the state of infiltration/presence of liquid on the surface 3 of the roof 2, and/or data indicative of the position X, Y of the infiltration/presence of the liquid on the surface of the roof 2 may be expediently displayed to a user through the mobile communication device 16.

The operating method of the system 1 entails measurement of the resistances of the electric resistive measurement circuits of each of the tapes 4 of the system 1, detection of the state of infiltration/presence and/or of the position of the conductive liquid on the surface to be monitored based on the resistances measured on the tapes 4. More in detail, the electronic device 10 may detect a state of absence of infiltration of water when it determines an infinite resistance (circuit open) on each of the tapes 4; and a state of presence of infiltration of water when it determines, on a tape 4, a resistance with finite value; the position X of the infiltration along the tape based on the measured resistance; the position Y of the infiltration based on the position Y of the tape 4.

In the example shown in Figure 5, the water forms a closing branch of the two wires 6 of the electric resistive measurement circuit between the third and the fourth resistors (starting from the left). The electronic device 10 therefore receives from the electric measurement module 8, the resistive value measured Rm=3*Rx, and processes it based on the pre-set reciprocal distances between the electric components 7. The electronic device 10 may then determine the position of the water on the tape 4 along the axis X based on: distance between the resistors, the resistive value measured, and the resistance Rx of the resistors. For example, it is possible to implement the following equation:
Xi= Rm/Rx*ΔX in which ΔX is the distance between each electric component 7 along the axis A or the axis X, Rm is the measured resistance and Rx is the value of the resistances of the electric components 7 along the wire 6.

The electronic device 10 is further designed to transmit by means of the electronic communication stage 13 of the central electronic control unit 19 the infiltration data to the cloud systems 15 and/or to at least a communication device 16.

The system described above is extremely advantageous since it promptly provides not only indication of the presence of an infiltration of water into the roof but also the exact position of the infiltration X,Y on the monitored surface.

Lastly, it is clear that modifications and variations may be made to the system, to the method and to the sensing tape described and illustrated above without departing from the scope of the present invention defined by the attached claims.

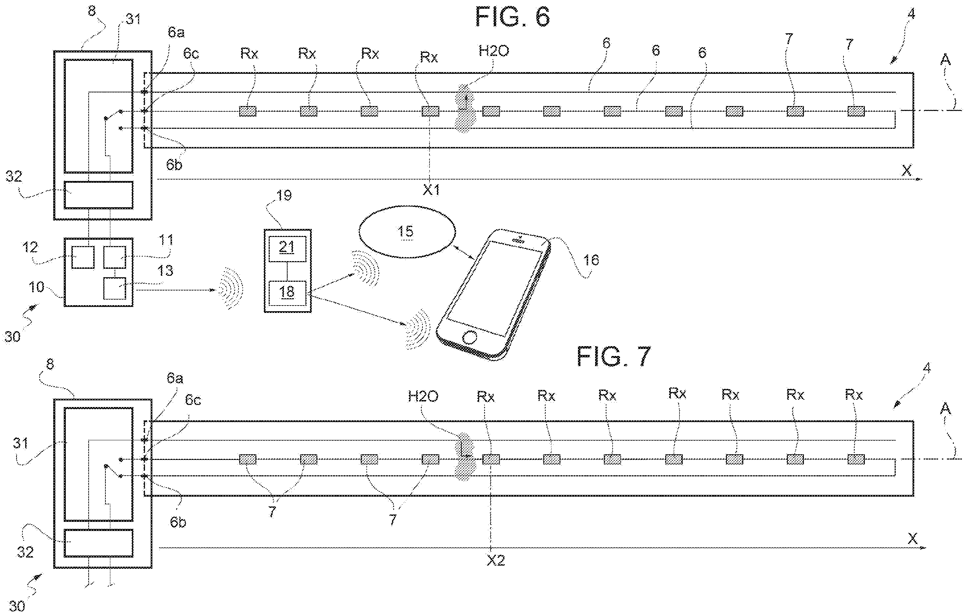

For example, the system 30 shown in Figures 6 and 7 differs from the system 1 since the tape 4 comprises three wires 6 which extend parallel to the axis A, and in which the wire 6, along which the electric components 7, is arranged, between the two wires 6 without electric components 7 and is connected in series to one of the two wires 6. According to the example shown in Figures 6 and 7, the tape 4 has a first terminal 6a connected to a first wire 6 without electric components 7; a second terminal 6b connected to a second wire 6 without electric components 7; a third terminal 6c connected to a third central wire 6 provided with electric components 7 arranged in series to one another along the same.

The electric measurement modules 8 (one only of which is shown in Figures 6 and 7) may comprise a resistance measurement module 32 and a switch module 31 designed to selectively connect, on command, the resistance measurement module 32 to the terminals 6a, 6c (Figure 6) or, alternatively, to the terminals 6a, 6b (Figure 7). The electric measurement module 8 is configured so as to carry out a double measurement/determination of resistance in each tape 4. The first measurement may be made by commanding the switch module 31 to connect the first 6a and second 6c terminals to the resistance measurement module 32 (Figure 6). In this case the resistance measured corresponds to the sum of the resistances SR1=4*Rx of the four resistors present on the wire 6 upstream of the infiltration of water H2O.

The second measurement may be made by commanding the switch module 31 to connect the first 6a and third terminal 6b to the resistance measurement module 32. In this case the resistance measured corresponds to the sum of the resistances SR2=7*Rx of the seven resistors present along the wire 6 downstream of the infiltration of water. The electronic device 10 therefore receives from the electric measurement module 8 two measured resistance values SR1 and SR2 and determines as a function of the same the axial extension of the infiltration of water along the axis A of the tape 2. The electronic device 10 may determine the position X1 (Figure 6) as a function of SR1 and the position X2 (Figure 7) based on SR2. Analogously to the system 1, the axial extension X1, X2 of the infiltration of water along the axis X and the position of the tape 4 relative to the axis Y is transmitted by the electronic device 10 to the systems 15 and devices 16 by means of the central electronic control unit 19.

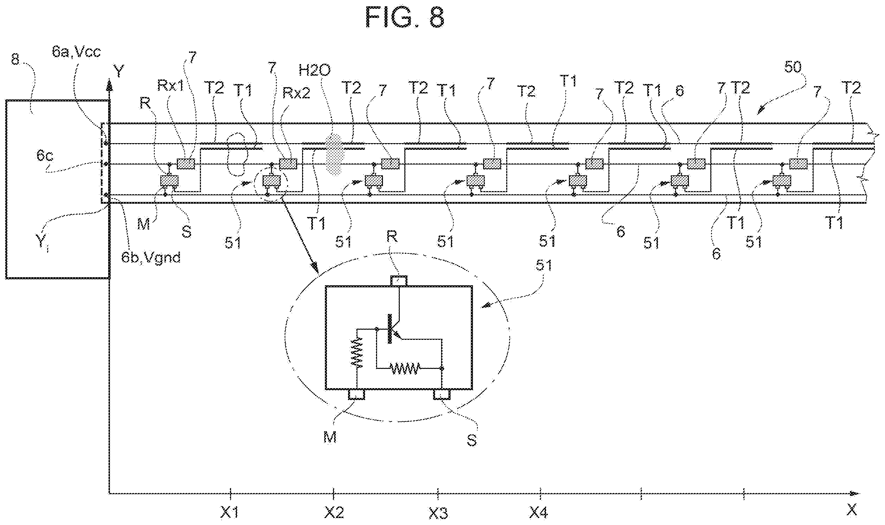

The embodiment of the invention illustrated in Figure 8 is relative to a sensing tape 50 which is similar to the sensing tape 4 shown in Figures 6 and 7, the component parts of which will be designated, where possible, by the same reference numbers that designate corresponding parts of the sensing tape 4.

With reference to Figure 8, the sensing tape 50 differs from the sensing tape 4 shown in Figures 6, 7 due to the fact that it comprises a plurality of electronic switch modules 51, which are connected to two adjacent wires 6, preferably at the resistors 7. In the example illustrated in Figure 8, the terminals 6a and 6b are set to respective reference potentials, preferably a potential Vcc (5V) and a ground potential Vgnd, while the third terminal 6c is a terminal for reading the resistance of the tape 50, used for determining the position of the water along the axis X.

Preferably, the electronic switch modules 51 may comprise at least three terminals R, M and S. One terminal R is connected to the second wire 6 for connection of the resistors 7, the terminal M is connected to the third wire 6 located at the ground potential Vgnd, and the terminal S is connected to a conductor branch T1 described in detail below.

According to a possible embodiment, the electronic switch modules 51 may comprise for example a transistor, for example a bipolar junction transistor. The transistor has a first terminal, for example a collector terminal, connected to the terminal R, a second terminal, for example a base terminal, connected to the terminal M through a resistor, and a third terminal, for example an emitter terminal, which is connected to the terminal S and to the base terminal through a resistor.

The third terminal is further connected to the conductor branch T1 which extends preferably rectilinear for a certain length so as to be roughly adjacent to the first wire 6 without being in contact with it. Preferably, the first wire 6 has a section T2 roughly adjacent to the conductor branch T1 having roughly the same length. Preferably, the conductor branch T1 and the section T2 of the first wire 6 are both superficially open/uncovered, namely they are not embedded in the tape 50, so that they come into contact with the water. Preferably the branch T1 and the section T2 may be arranged on the layer 5 so that they are at a relative resistor 7, for example immediately downstream thereof. Preferably the branch T1 and the section T2 may have a length measured along the axis A less than or equal to approximately 50 cm.

In use, the water establishes conduction between the branch T1 and the section T2 determining the connection between the transistor emitter terminal and the terminal 6a set to the voltage Vcc. In this phase, the transistor switches, passing from interdiction to switch-on, and connects the second wire 6 to the third wire 6. The electric measurement module 8 detects a resistance variation which depends on the position in which the connection between the sections T1 and T2 has occurred.

With reference to the embodiment of the invention shown in Figure 8, a presence of water between the sections T1, T2 associated with the longitudinal position X2 determines switch-on of the second transistor (enlargement from the left in Figure 8) which connects the second and third wire downstream of the first resistor 7. In this case the electric measurement module detects a resistance variation between the terminals 6c and 6b equal to the resistance Rx1 of the resistor immediately upstream of the second transistor.

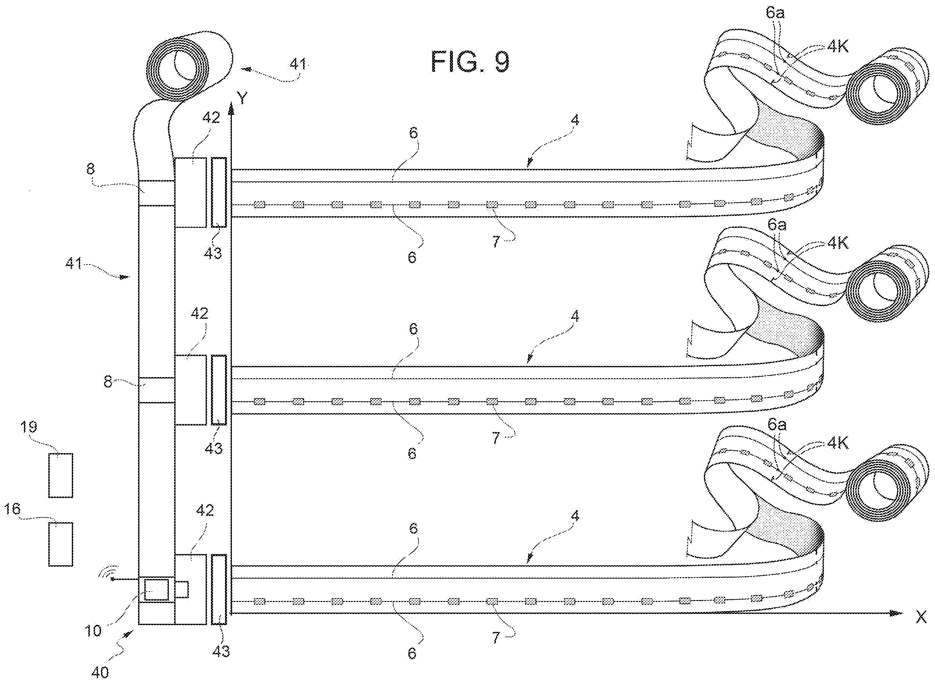

The presence of the electronic switch module 51 has the technical effect of increasing the sensitivity of the system 1 to the presence of water. It is understood that the present invention is not limited to an electronic switch module 31 comprising a transistor, and any other type of electronic switch may be used. The embodiment illustrated in Figure 9 is relative to a system 40, which is similar to the system 1 shown in Figure 1 and the component parts of which will be designated, where possible, by the same reference numbers that designate corresponding parts of the system 1.

With reference to Figure 9, the system 40 differs from the system 1 shown in Figure 1 due to the fact that, in addition to comprising the flexible sensing tapes 4, which may be produced according to the different embodiments described above, it comprises a main flexible tape 41, which internally contains the electric measurement modules 8 and the relative electric connections (not illustrated) and preferably the processing device 10. The main tape 41 has preferably the same structure and material as the sensing tapes 4. Preferably, the electric measurement modules 8 and preferably the processing device 10 are enclosed/embedded in said support layer 5 so as to be completely covered by the same.

As shown in Figure 9, the main tape 41 may be arranged in a direction parallel to the axis Y, at the ends of the sensing tapes 4 so as to be approximately orthogonal thereto. The system 40 may furthermore comprise projecting lateral sections 42 which extend maytilever from the same side of the main tape 41 roughly orthogonal to the same, preferably at the electric measurement module 8, and internally contain connection wires and/or connection terminals of the electric measurement module 8. The system 40 further comprises junction terminals 43 designed to electrically connect the connection wires or the connection terminals of the lateral sections 42 to the electric terminals of the wires 6 of the sensing tapes 4. Preferably, the processing device 10 may be embedded in the main tape 41 at a preferably lower end, and have an adjacent lateral section 42 for connection between the latter and a sensing tape 4 (Figure 9).

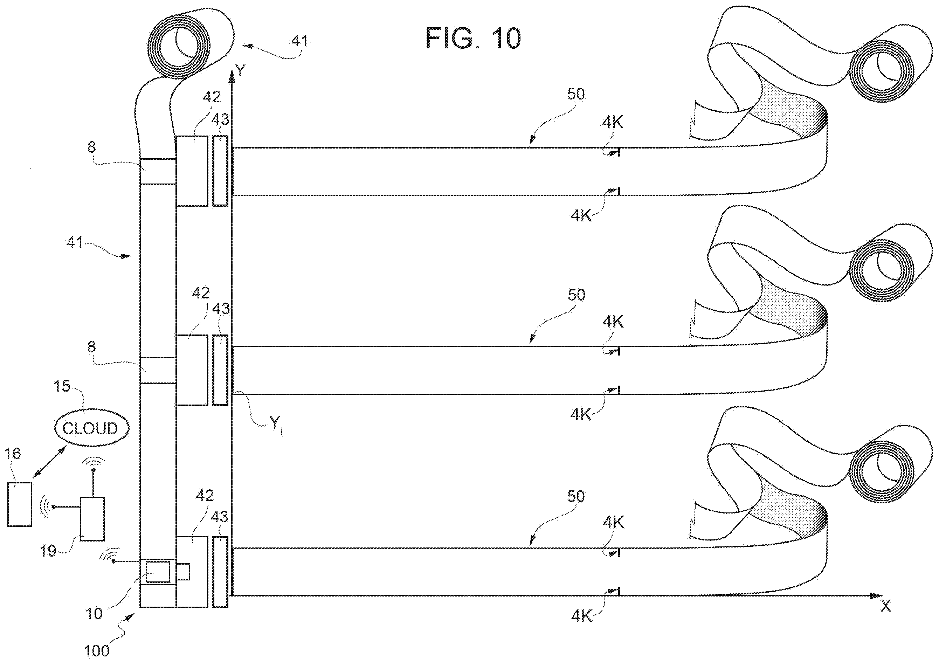

The embodiment illustrated in Figure 10 is relative to a system 100, which is similar to the system 40 shown in Figure 9 and to the system 1 shown in Figure 1 and the component parts of which will be designated, where possible, by the same reference numbers as those designating corresponding parts of the system 40 and/or of the system 1.

In particular the system 100 differs from the system 1 shown in Figure 1 due to the fact that it expediently comprises a flexible main tape 41 (analogously to the system 40 shown in Figure 9) which internally contains the electric measurement modules 8 and the relative electric connections (not illustrated) and preferably the processing device 10.

The system 100 further differs from the system 40 due to the fact that the tapes 4 of the latter are replaced by the tapes 50 shown in detail in Figure 8, made as described above. It is therefore understood that the system 100 comprises a plurality of sensing tapes 50 made as described above and shown in Figure 8, which are arranged side-by-side, parallel to one another and to the axis A, and are connected by their terminals 6a, 6b and 6c to the electric terminals of the main tape 41. The main tape 41 of the system 100 is therefore identical to the flexible tape 41 of the system 40, namely it is arranged roughly orthogonal to the tapes 50, and internally contains the electric measurement modules 8 and the relative electric connections (not illustrated) and preferably the processing device 10.

It is understood that the operations implemented by the system 100 by means of: the electronic device 10, the central electronic control unit 19, the remote communication devices 16, the electric measurement modules 8, the systems 15, are the same as those implemented by the relative devices, equipment and systems present in the systems 1 and 40 (described above). It is further understood that the method to determine the presence and the position of a conductive liquid on the surface 3 by means of the system 100 comprises the following steps: arranging one or more tapes 50 resting on the surface 3 in the pre-set positions Yi, and determining the presence and the position of the conductive liquid on the surface 3 based on the electric resistance determined between the electric wires 6 of said one or more tapes 50.

It is further understood that the tape 50 analogously to the tape 4 may be expediently applied to a surface 3 that corresponds to the surface of a roof, or of a piece of furniture, or of a skirting board or of a wall.

## Claims

1. A sensing tape (50) to determine the presence and the position of a conductive liquid on a surface,
said sensing tape is thin and flexible, having an elongated shape, and extends along a longitudinal axis (A) and is designed to be arranged on said surface,
said sensing tape is arranged in a pre-set position (Yi) and comprises:
at least one support layer (5) made of electrically insulating material,
first, second and third electric wires (6) that are arranged in/on said support layer (5) and extend parallel to said longitudinal axis (A) side-by-side and spaced from one another said sensing tape (50) being **characterized by** comprising:
a plurality of conductor branches (T1) which are adjacent to respective sections (T2) of said first electric wire (6) and are designed to be selectively connected to and disconnected from respective sections (T2) of the first electric wire based on the presence and, respectively, absence of said conductive liquid on the tape at said sections (T2),
a plurality of electric resistive components (7) which are connected in series between one another along said second electric wire (6) in pre-set positions (Xi) and have respective pre-set resistances (Rx),
a plurality of electronic switch modules (51) which are connected between said resistive electric components (7) and said third electric wire (6) set at a pre-set electric potential,
the electronic switch modules (51) are designed to be selectively actuated based on the presence or absence of said conductive liquid between said conductor branches (T1) and the corresponding sections (T2) so as to vary the resistance on a terminal (6c) of said second electric wire (6) based on the position of the conductive liquid along said tape,
wherein
said conductor branch (T1) extends rectilinear for a certain length so as to be adjacent to a relative said section (T2) of the first electric wire (6) without being in contact with the same,
said conductor branch (T1) and the relative section (T2) of the first wire (6) are associated with said support layer (5) so that each one may come into contact with said conductive liquid,
said conductor branch (T1) and the relative section (T2) are arranged on the layer (5) so as to be adjacent to a relative electric resistive component (7).

2. The tape according to claim 1, wherein said electronic switch modules (51) comprise transistor means.

3. The tape according to claim 2, wherein said transistor means comprise a first terminal (R) connected to said second electric wire (6) at a relative electric resistive component (7), a second terminal (M) connected to said third electric wire (6), and a third terminal (S) connected to a said conductor branch (T1).

4. The tape according to any one of the preceding claims, wherein said conductor branch (T1) and the relative section (T2) of the first wire (6) are arranged on the outer surface of said tape so that they come into contact with the liquid present on said tape.

5. The tape according to any one of the preceding claims, wherein said conductor branch (T1) and said section (T2) have a length less than or equal to approximately 50 cm.

6. The sensing tape according to any one of the preceding claims, wherein said support layer (5) is based on polyimide or FR4.

7. The sensing tape according to any one of the preceding claims, wherein said support layer (5) is made by means of a KAPTON^{®}-based film.

8. The sensing tape according to any one of the claims from 1 to 7, wherein said support layer (5) is based on a material permeable to the conductive liquid.

9. The sensing tape according to any one of the preceding claims, wherein said conductor branches (T1) and said sections (T2) are arranged on the surface of said support layer (5) so as to come into contact with the liquid present on said tape.

10. The tape according to any one of the preceding claims, having a width ranging from about 10 mm to about 25 mm.

11. The tape according to any one of the preceding claims, wherein said support layer (5) has a thickness ranging from 50 micron to 350 micron.

12. A system (100) for determining the presence and the position of an electrically conductive liquid on a surface (3), said system comprising:
one or more first sensing tapes (50) made according to any one of the preceding claims,
electric measurement means (8) connected to the terminals (6c) of said electric wires (6) of said first sensing tapes (50) to measure the relative resistance,
electronic means (10) configured so as to determine the presence and the position of conductive liquid on said surface based on the electric resistance measured by means of said first sensing tape/s (50).

13. The system according to claim 12, wherein said first sensing tapes (50) are arranged on said surface parallel to one another and to said longitudinal axis (A), said system comprises a second flexible tape (41), which is arranged on said surface so as to extend roughly orthogonally to said first sensing tapes (50), internally contains said electric measurement means (8) enclosed/embedded in the same and is configured to be electrically connected laterally to said first sensing tapes (50) .

14. The system according to claim 13, wherein said second tape (41) has an elongated shape, extends along a longitudinal axis (Y) orthogonal to said longitudinal axis (A) of said sensing tapes (50) and comprises a support layer (5) made of electrically insulating material, said electric measurement means (8) being electrically connected to respective first sensing tapes (50).

15. The system according to any one of the claims from 12 to 14, wherein said second tape (41) comprises projecting lateral sections (42) which extend cantilever from the same side of the second tape (41) roughly orthogonal to the at the electric measurement modules (8), and internally contain electric connection wires and/or terminals for connecting the electric measurement modules (8) to the respective first sensing tapes (50) .

16. The system according to claim 15, comprising junction terminals (43) designed to electrically connect the electric connection wires or the connection terminals of said lateral sections (42) of said second tape (41) to electric terminals (6a)(6b)(6c) of said first, second and third wires (6) of said first sensing tapes (50).

17. A method to determine the presence and the position of a conductive liquid on a surface (3), said method **characterized by** comprising the following steps:
arranging one or more first sensing tapes (50) according to any one of the claims 1 to 11 resting on said surface in pre-set positions (Yi),
determining the presence and the position of conductive liquid on said surface based on the electric resistance measured by means of said sensing tape/s (50).

18. The method according to claim 17, comprising the steps of:
positioning a plurality of first sensing tapes (50) on said surface parallel to one another in respective coordinates (Yi) pre-set relative to a first reference axis (Y) orthogonal to said longitudinal axis (A),
positioning a second flexible tape (41) on said surface parallel to said first reference axis (Y), so that the second tape (41) extends roughly orthogonal to said first sensing tapes (50), said second sensing tape (41) internally containing said electric measurement means (8) enclosed/embedded therein,
electrically connecting the electric terminals of the electric wires (6) of each first sensing tape (50) to the terminals of relative electric measurement means (8) present in the second tape (41),
determining the presence and the position of conductive liquid on said surface based on the electric resistances measured by the electric measurement means (8) on the first sensing tapes (50) and based on the coordinates of the first sensing tapes (50) relative to said first reference axis (Y).

19. The method according to claims 17 or 18, wherein said surface corresponds to the surface of a roof, or of a piece of furniture, or of a skirting board or of a wall.

## Patentansprüche

1. Ein Sensorband (50) zum Bestimmen des Vorhandenseins und der Position einer leitfähigen Flüssigkeit auf einer Oberfläche,
wobei das Sensorband dünn und flexibel ist, eine längliche Form hat und sich entlang einer Längsachse (A) erstreckt und dafür ausgelegt ist, auf der Oberfläche angeordnet zu werden,
das Sensorband in einer voreingestellten Position (Yi) angeordnet ist und umfasst:
mindestens eine Trägerschicht (5) aus elektrisch isolierendem Material,
erste, zweite und dritte elektrische Drähte (6), die in/auf der Trägerschicht (5) angeordnet sind und sich parallel zur Längsachse (A) nebeneinander und voneinander beabstandet erstrecken,
wobei das Sensorband (50) **dadurch gekennzeichnet ist, dass** es umfasst:
eine Vielzahl von Leiterzweigen (T1), die benachbart zu jeweiligen Abschnitten (T2) des ersten Elektrodrahts (6) sind und dazu ausgelegt sind, basierend auf dem Vorhandensein bzw. Nichtvorhandensein der leitenden Flüssigkeit, auf dem Band an den Abschnitten (T2) selektiv mit jeweiligen Abschnitten (T2) des ersten elektrischen Drahts verbunden und von diesen getrennt zu werden;
mehrere elektrische Widerstandskomponenten (7), die entlang des zweiten elektrischen Drahts (6) in voreingestellten Positionen (Xi) in Reihe miteinander verbunden sind und entsprechende voreingestellte Widerstände (Rx) haben;
eine Vielzahl von elektronischen Schaltmodulen (51), die zwischen den elektrischen Widerstandskomponenten (7) und dem dritten elektrischen Draht (6) angeschlossen sind, der auf ein voreingestelltes elektrisches Potential eingestellt ist,
die elektronischen Schaltmodule (51) dafür ausgelegt sind, basierend auf dem Vorhandensein oder Fehlen der leitenden Flüssigkeit zwischen den Leiterzweigen (T1) und den entsprechenden Abschnitten (T2), selektiv betätigt zu werden, um den Widerstand an einem Anschluss (6c) des zweiten elektrischen Drahts (6) basierend auf der Position der leitfähigen Flüssigkeit entlang des Bands zu variieren,
worin
der Leiterzweig (T1) sich über eine bestimmte Länge geradlinig erstreckt, um benachbart zu einem relativen Abschnitt (T2) des ersten elektrischen Drahts (6) zu sein, ohne mit demselben in Kontakt zu sein;
der Leiterzweig (T1) und der entsprechende Abschnitt (T2) des ersten Drahts (6) mit der Trägerschicht (5) verbunden sind, so dass jeder mit der leitfähigen Flüssigkeit in Kontakt kommen kann;
der Leiterzweig (T1) und der zugehörige Abschnitt (T2) auf der Schicht (5) so angeordnet sind, dass sie an ein zugehöriges elektrisches Widerstandselement (7) angrenzen.

2. Band nach Anspruch 1, wobei die elektronischen Schaltmodule (51) Transistormittel umfassen.

3. Band nach Anspruch 2, wobei die Transistormittel einen ersten Anschluß (R) umfassen, der mit dem zweiten elektrischen Draht (6) an einer relativen elektrischen Widerstandskomponente (7) verbunden ist, und einen zweiten Anschluß (M), der mit dem dritten elektrischen Draht (6) verbunden ist; und einen dritten Anschluss (S), der mit dem Leiterzweig (T1) verbunden ist.

4. Band nach einem der vorhergehenden Ansprüche, wobei der Leiterzweig (T1) und der entsprechende Abschnitt (T2) des ersten Drahts (6) auf der Außenfläche des Bands so angeordnet sind, dass sie mit der auf dem Band vorhandenen Flüssigkeit in Kontakt kommen.

5. Band nach einem der vorhergehenden Ansprüche, wobei der Leiterzweig (T1) und der Abschnitt (T2) eine Länge von weniger als oder gleich etwa 50 cm aufweisen.

6. Sensorband nach einem der vorhergehenden Ansprüche, wobei die Trägerschicht (5) auf Polyimid oder FR4 basiert ist.

7. Sensorband nach einem der vorangehenden Ansprüche, wobei die Trägerschicht (5) mittels einer auf KAPTON^{®} basierenden Schicht hergestellt ist.

8. Sensorband nach einem der Ansprüche 1 bis 7, wobei die Trägerschicht (5) auf einem Material basiert, das für die leitfähige Flüssigkeit durchlässig ist.

9. Sensorband nach einem der vorhergehenden Ansprüche, wobei die Leiterzweige (T1) und die Abschnitte (T2) auf der Oberfläche der Trägerschicht (5) so angeordnet sind, dass sie mit der auf dem Band vorhandenen Flüssigkeit in Kontakt kommen.

10. Band nach einem der vorhergehenden Ansprüche mit einer Breite im Bereich von etwa 10 mm bis etwa 25 mm.

11. Band nach einem der vorangehenden Ansprüche, wobei die Trägerschicht (5) eine Dicke im Bereich von 50 µm bis 350 µm hat.

12. System (100) zum Bestimmen des Vorhandenseins und der Position einer elektrisch leitfähigen Flüssigkeit auf einer Oberfläche (3), wobei das System umfasst:
ein oder mehrere erste Sensorbänder (50), hergestellt nach einem der vorhergehenden Ansprüche;
elektrische Messmittel (8), die mit den Anschlüssen (6c) der elektrischen Drähte (6) der ersten Sensorbänder (50) verbunden sind, um den relativen Widerstand zu messen;
elektronische Mittel (10), die so konfiguriert sind, dass sie das Vorhandensein und die Position einer leitfähigen Flüssigkeit auf der Oberfläche auf der Grundlage des elektrischen Widerstands bestimmen, der mittels des/der ersten Sensorbandes/-bänder (50) gemessen wird.

13. System nach Anspruch 12, wobei die ersten Sensorbänder (50) auf der Oberfläche parallel zueinander und zur Längsachse (A) angeordnet sind, wobei das System ein zweites flexibles Band (41) umfasst, das auf der Oberfläche angeordnet ist um sich ungefähr orthogonal zu den ersten Sensorbändern (50) zu erstrecken, wobei die elektrischen Messmittel (8) intern enthalten sind und darin eingeschlossen/eingebettet sind, und so konfiguriert ist, dass es seitlich mit den ersten Sensorbändern (50) elektrisch verbunden ist.

14. System nach Anspruch 13, wobei das zweite Band (41) eine längliche Form hat, sich entlang einer Längsachse (Y) orthogonal zu der Längsachse (A) der Sensorbänder (50) erstreckt und eine Trägerschicht (5) aus elektrisch isolierendem Material umfasst, wobei die elektrischen Messmittel (8) elektrisch mit entsprechenden ersten Sensorbändern (50) verbunden sind.

15. System nach einem der Ansprüche 12 bis 14, wobei das zweite Band (41) vorstehende seitliche Abschnitte (42) umfasst, die sich freitragend von der gleichen Seite des zweiten Bands (41) ungefähr orthogonal zu den elektrischen Messmodulen (8) und enthalten intern elektrische Verbindungsdrähte und/oder Anschlüsse zum Verbinden der elektrischen Messmodule (8) mit den jeweiligen ersten Sensorbändern (50).

16. System nach Anspruch 15, das Verbindungsanschlüsse (43) umfasst, die dafür ausgelegt sind, die elektrischen Verbindungsdrähte oder die Verbindungsanschlüsse der seitlichen Abschnitte (42) des zweiten Bands (41) elektrisch mit elektrischen Anschlüssen (6a), (6b), (6c) der ersten, zweiten und dritten Drähte (6) der ersten Sensorbänder (50) zu verbinden.

17. Verfahren zum Bestimmen des Vorhandenseins und der Position einer leitfähigen Flüssigkeit auf einer Oberfläche (3), wobei das Verfahren **dadurch gekennzeichnet ist, dass** es die folgenden Schritte umfasst:
Anordnen eines oder mehrerer erster Sensorbänder (50) nach einem der Ansprüche 1 bis 11, aufliegend auf der Oberfläche in voreingestellten Positionen (Yi);
Bestimmen des Vorhandenseins und der Position einer leitfähigen Flüssigkeit auf der Oberfläche auf der Grundlage des elektrischen Widerstands, der mittels des Sensorbands/der Sensorbänder (50) gemessen wird.

18. Verfahren nach Anspruch 17, umfassend die Schritte:
Positionieren mehrerer erster Sensorbänder (50) auf der Oberfläche parallel zueinander in entsprechenden Koordinaten (Yi), die relativ zu einer ersten Referenzachse (Y) orthogonal zu der Längsachse (A) voreingestellt sind;
Positionieren eines zweiten flexiblen Bandes (41) auf der Oberfläche parallel zu der ersten Referenzachse (Y), so dass sich das zweite Band (41) ungefähr orthogonal zu den ersten Sensorbändern (50) erstreckt, wobei das zweite Sensorband (41) intern das elektrische Messmittel (8) darin eingeschlossen/eingebettet enthält;
elektrisches Verbinden der elektrischen Anschlüsse der elektrischen Drähte (6) jedes ersten Sensorbands (50) mit den Anschlüssen der entsprechenden elektrischen Messmitteln (8), die in dem zweiten Band (41) vorhanden sind;
Bestimmen des Vorhandenseins und der Position von leitfähiger Flüssigkeit auf der Oberfläche auf der Grundlage der elektrischen Widerständen, die durch die elektrischen Messmittel (8) auf den ersten Sensorbändern (50) gemessen werden, und auf der Grundlage der Koordinaten der ersten Sensorbänder (50) relativ zu diesen erste Bezugsachse (Y).

19. Verfahren nach Anspruch 17 oder 18, wobei die Oberfläche der Oberfläche eines Dachs oder eines Möbelstücks oder einer Fußleiste oder einer Wand entspricht.

## Revendications

1. Bande de détection (50) pour déterminer la présence et la position d'un liquide conducteur sur une surface,
ladite bande de détection est mince et flexible, ayant une forme allongée, et s'étend le long d'un axe longitudinal (A) et est destinée à être disposée sur ladite surface,
ladite bande de détection est agencée dans une position prédéfinie (Yi) et comprend:
au moins une couche support (5) en matériau électriquement isolant,
des premier, deuxième et troisième fils électriques (6) qui sont disposés dans/sur ladite couche de support (5) et s'étendent parallèlement audit axe longitudinal (A) côte à côte et espacés l'un de l'autre
ladite bande de détection (50) étant **caractérisée en ce qu'**elle comprend:
une pluralité de branches conductrices (T1) qui sont adjacentes à des sections respectives (T2) dudit premier fil électrique (6) et sont conçues pour être sélectivement connectées et déconnectées de sections respectives (T2) du premier fil électrique sur la base de la présence et, respectivement, absence dudit liquide conducteur sur la bande au niveau desdites sections (T2),
une pluralité de composants résistifs électriques (7) qui sont connectés en série entre eux le long dudit second fil électrique (6) dans des positions prédéfinies (Xi) et ont des résistances prédéfinies respectives (Rx),
une pluralité de modules de commutation électronique (51) qui sont connectés entre lesdits composants électriques résistifs (7) et ledit troisième fil électrique (6) réglé à un potentiel électrique prédéfini,
les modules interrupteurs électroniques (51) sont destinés à être actionnés sélectivement en fonction de la présence ou de l'absence dudit liquide conducteur entre lesdites branches conductrices (T1) et les tronçons correspondants (T2) afin de faire varier la résistance sur une borne (6c) de ledit deuxième fil électrique (6) en fonction de la position du liquide conducteur le long dudit ruban,
où
ladite branche conductrice (T1) s'étend de manière rectiligne sur une certaine longueur de manière à être adjacente à un tronçon relatif (T2) du premier fil électrique (6) sans être en contact avec celui-ci,
ladite branche conductrice (T1) et la section relative (T2) du premier fil (6) sont associées à ladite couche de support (5) de sorte que chacune puisse entrer en contact avec ledit liquide conducteur,
ladite branche conductrice (T1) et la section relative (T2) sont disposées sur la couche (5) de manière à être adjacentes à un composant résistif électrique relatif (7).

2. Bande selon la revendication 1, dans laquelle lesdits modules de commutation électronique (51) comprennent des moyens de transistor.

3. Bande selon la revendication 2, dans laquelle lesdits moyens de transistor comprennent une première borne (R) connectée audit second fil électrique (6) au niveau d'un composant résistif électrique relatif (7), une seconde borne (M) connectée audit troisième fil électrique fil (6), et une troisième borne (S) connectée à une dite branche conductrice (T1).

4. Bande selon l'une quelconque des revendications précédentes, dans laquelle ladite branche conductrice (T1) et la section relative (T2) du premier fil (6) sont agencées sur la surface extérieure de ladite bande de sorte qu'elles viennent en contact avec le liquide présent sur ladite bande.

5. Bande selon l'une quelconque des revendications précédentes, dans laquelle ladite branche conductrice (T1) et ladite section (T2) ont une longueur inférieure ou égale à environ 50 cm.

6. Bande de détection selon l'une quelconque des revendications précédentes, dans laquelle ladite couche de support (5) est à base de polyimide ou de FR4.

7. Bande de détection selon l'une quelconque des revendications précédentes, dans laquelle ladite couche de support (5) est réalisée au moyen d'un film à base de KAPTON^{®}.

8. Bande de détection selon l'une quelconque des revendications 1 à 7, dans laquelle ladite couche de support (5) est à base d'un matériau perméable au liquide conducteur.

9. Bande de détection selon l'une quelconque des revendications précédentes, dans laquelle lesdites branches conductrices (T1) et lesdites sections (T2) sont disposées sur la surface de ladite couche de support (5) de manière à entrer en contact avec le liquide présent sur ladite bande.

10. Bande selon l'une quelconque des revendications précédentes, ayant une largeur allant d'environ 10 mm à environ 25 mm.

11. Bande selon l'une quelconque des revendications précédentes, dans laquelle ladite couche de support (5) a une épaisseur allant de 50 microns à 350 microns.

12. Système (100) pour déterminer la présence et la position d'un liquide électriquement conducteur sur une surface (3), ledit système comprenant:
une ou plusieurs premières bandes de détection (50) fabriquées selon l'une quelconque des revendications précédentes,
un moyen de mesure électrique (8) connecté aux bornes (6c) desdits fils électriques (6) desdites premières bandes de détection (50) pour mesurer la résistance relative,
des moyens électroniques (10) configurés de manière à déterminer la présence et la position de liquide conducteur sur ladite surface sur la base de la résistance électrique mesurée au moyen de ladite ou desdites premières bandes de détection (50).

13. Système selon la revendication 12, dans lequel lesdites premières bandes de détection (50) sont agencées sur ladite surface parallèlement les unes aux autres et audit axe longitudinal (A), ledit système comprend une seconde bande flexible (41), qui est agencée sur ladite surface de manière à s'étendre approximativement orthogonalement auxdites premières bandes de détection (50), contenant intérieurement ledit moyen de mesure électrique (8) qui est enfermé/intégré dans celui-ci et est configuré pour être électriquement connecté latéralement auxdites premières bandes de détection (50).

14. Système selon la revendication 13, dans lequel ladite deuxième bande (41) a une forme allongée, s'étend selon un axe longitudinal (Y) orthogonal audit axe longitudinal (A) desdites bandes de détection (50) et comprend une couche de support (5) constitué d'un matériau électriquement isolant, lesdits moyens de mesure électrique (8) étant connectés électriquement à des premières bandes de détection respectives (50).

15. Système selon l'une quelconque des revendications 12 à 14, dans lequel ledit deuxième ruban (41) comprend des sections latérales saillantes (42) qui s'étendent en porte-à-faux depuis le même côté de la deuxième bande (41) à peu près orthogonalement aux modules de mesure électrique (8) et contiennent à l'intérieur des fils de connexion électrique et/ou des bornes pour connecter les modules de mesure électrique (8) aux premières bandes de détection respectives (50).

16. Système selon la revendication 15, comprenant des bornes de jonction (43) conçues pour connecter électriquement les fils de connexion électrique ou les bornes de connexion desdites sections latérales (42) dudit deuxième ruban (41) à des bornes électriques (6a)(6b)(6c) desdits premier, deuxième et troisième fils (6) desdites premières bandes de détection (50).

17. Procédé pour déterminer la présence et la position d'un liquide conducteur sur une surface (3), ledit procédé étant **caractérisé en ce qu'**il comprend les étapes suivantes:
agencer une ou plusieurs premières bandes de détection (50) selon l'une quelconque des revendications 1 à 11 reposant sur ladite surface dans des positions prédéfinies (Yi),
déterminer la présence et la position de liquide conducteur sur ladite surface sur la base de la résistance électrique mesurée au moyen de ladite ou desdites bandes de détection (50).

18. Procédé selon la revendication 17, comprenant les étapes de:
positionner une pluralité de premières bandes de détection (50) sur ladite surface parallèlement les unes aux autres selon des coordonnées respectives (Yi) prédéfinies par rapport à un premier axe de référence (Y) orthogonal audit axe longitudinal (A),
positionnement d'une deuxième bande flexible (41) sur ladite surface parallèle audit premier axe de référence (Y), de sorte que la deuxième bande (41) s'étend approximativement orthogonalement auxdites premières bandes de détection (50), ladite deuxième bande de détection (41) contenant intérieurement lesdits moyens de mesure électriques (8) y étant enfermés/incorporés,
connecter électriquement les bornes électriques des fils électriques (6) de chaque première bande de détection (50) aux bornes des moyens de mesure électriques relatifs (8) présents dans la deuxième bande (41),
déterminer la présence et la position de liquide conducteur sur ladite surface sur la base des résistances électriques mesurées par les moyens de mesure électrique (8) sur les premières bandes de détection (50) et sur la base des coordonnées des premières bandes de détection (50) par rapport audit premier axe de référence (Y).

19. Procédé selon les revendications 17 ou 18, dans lequel ladite surface correspond à la surface d'un toit, ou d'un meuble, ou d'une plinthe ou d'un mur.
